# EUROPEAN PATENT APPLICATION

(11) **EP 2 506 117 A1**
(43) Date of publication of application: **03.10.2012**
(21) Application number: 11159966.8
(22) Date of filing: 28.03.2011
(51) Int. Cl.: G06F 3/01, G06F 3/041

(54) **Portable electronic device with display and feedback module**

(71) Applicant: Research In Motion Limited, Waterloo, ON N2L 3W8 (CA)
(72) Inventor: Infanti, James C., Waterloo Ontario N2L 3L3 (CA); Sulem, Firmansyah Kuncoko, Waterloo Ontario N2L 3L3 (CA)
(74) Representative: Moore, Barry

(57) **Abstract**

According to one aspect, there is provided a portable electronic device, including a body portion, a display provided in the body portion, and a feedback module coupled to the display and the body portion. The feedback module is adapted to secure the display to the body portion and provide feedback by moving the display relative to the body portion.

## Description

Embodiments herein relate generally to portable electronic devices, and more particularly to portable electronic devices having a display and a feedback module for providing motion-based physical feedback.

Electronic devices, including portable electronic devices, have gained widespread use and may provide a variety of functions including, telephonic, electronic text messaging and other personal information manager application functions. Portable electronic devices can include mobile stations such as cellular phones, smart phones, personal digital assistants, tablets and laptop computers.

Some portable electronic devices are touch-sensitive devices with a display, such as a liquid crystal display (LCD), that has a touch-sensitive overlay. Touch-sensitive devices may be useful, as handheld devices may be small and limited in space available for user input and output devices. Further, touch-sensitive devices may allow a variety of input and output configurations, particularly since the screen content on a touch-sensitive display may change depending on the particular functions and operations being performed.

### BRIEF DESCRIPTION OF THE DRAWINGS

Embodiments of the present disclosure will now be described, by way of example only, with reference to the attached figures, wherein:

Figure 1 is a simplified block diagram of components of a portable electronic device;

Figure 2 is a front perspective view of a portable electronic device according to one embodiment;

Figure 3 is a side cross-sectional view of a display and feedback module for the portable electronic device according to one embodiment;

Figure 4 is a close-up perspective view of the display and feedback module of Figure 3;

Figure 5 is a perspective view of the display and feedback module of Figure 3;

Figure 6 is a side cross-sectional view of a display and feedback module for a portable electronic device according to another embodiment; and

Figure 7 is a side cross-sectional view of a display and feedback module for a portable electronic device according to yet another embodiment.

### DETAILED DESCRIPTION

Described herein are various portable electronic devices that include a display provided in a body portion or housing, and functional components such as a memory and a processor. The display may be a touch screen display and be adapted to provide feedback to a user. In particular, the display may be coupled to a feedback module and be movable along one or more directions (e.g. a direction normal to the surface of the display) to provide tactile feedback to a user, for example when the user pushes on the screen (e.g. when typing or selecting a button).

It will be appreciated that for simplicity and clarity of illustration, where considered appropriate, reference numerals may be repeated among the figures to indicate corresponding or analogous elements. In addition, numerous specific details are set forth in order to provide a thorough understanding of the example embodiments described herein. However, it will be understood by those of ordinary skill in the art that in some instances the example embodiments described herein may be practiced without these specific details. In other instances, well-known methods, procedures and components have not been described in detail so as not to obscure the example embodiments described herein.

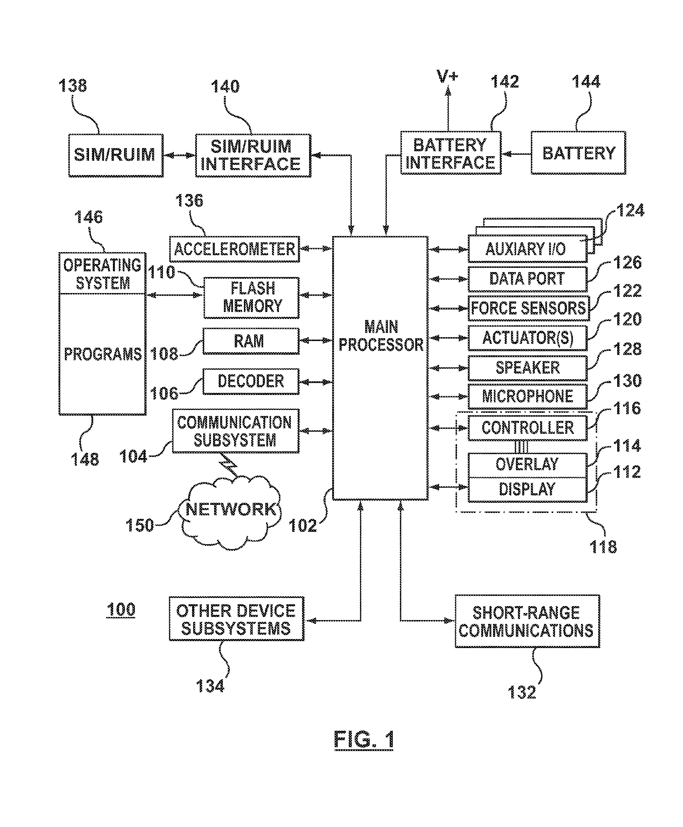

Figure 1 shows a simplified block diagram of components of a portable electronic device 100. The portable electronic device 100 includes multiple components such as a processor 102 that controls the operations of the portable electronic device 100. Communication functions, including data communications, voice communications, or both may be performed through a communication subsystem 104. Data received by the portable electronic device 100 may be decompressed and decrypted by a decoder 106. The communication subsystem 104 may receive messages from and send messages to a wireless network 150.

The wireless network 150 may be any type of wireless network, including, but not limited to, data-centric wireless networks, voice-centric wireless networks, and dual-mode networks that support both voice and data communications.

The portable electronic device 100 may be a battery-powered device and as shown may include a battery interface 142 for receiving one or more rechargeable batteries 144.

The processor 102 may also interact with additional subsystems, such as a Random Access Memory (RAM) 108, a flash memory 110, a display 112 (e.g. with a touch-sensitive overlay 114 connected to an electronic controller 116 that together comprise a touch-sensitive display 118), an actuator assembly 120, one or more force sensors 122, an auxiliary input/output (I/O) subsystem 124, a data port 126, a speaker 128, a microphone 130, short-range communications systems 132 and other device subsystems 134.

In some embodiments, user-interaction with the graphical user interface may be performed through the touch-sensitive overlay 114. In particular, the processor 102 may interact with the touch-sensitive overlay 114 via the electronic controller 116. Information, such as text, characters, symbols, images, icons, and other items may be displayed or rendered on the portable electronic device 100 and displayed on the touch-sensitive display 118 via the processor 102.

In some embodiments, the touch-sensitive display 118 may provide tactile feedback to a user interacting with the touch-sensitive display 118. For example, the touch-sensitive display 118 may be adapted to move in response to a user action, such as when a user presses a button displayed on the touch-sensitive display 118 with a sufficient quantity of force (e.g. as may determined by the force sensors 122). In this manner, the touch-sensitive display 118 may simulate the effect of pressing a physical key or button using the touch-sensitive display 118.

In some embodiments, the tactile feedback provided through the touch-sensitive display 118 may include other feedback modes. For example, the touch-sensitive display 118 may be vibrated in response to a user's touch.

In some embodiments, the processor 102 may interact with an accelerometer 136 as shown in Figure 1. The accelerometer 136 may be used for detecting the direction of gravitational forces or gravity-induced reaction forces, which may help when determining the orientation of the device 100 for example.

To identify a subscriber for network access, in some embodiments the portable electronic device 100 may use a Subscriber Identity Module or a Removable User Identity Module (SIM/RUIM) card 138 inserted into a SIM/RUIM interface 140 for communication with a network (such as the wireless network 150). Alternatively, user identification information may be programmed into the flash memory 110 or performed using other techniques.

The portable electronic device 100 also includes an operating system 146 and software components 148 that are executed by the processor 102 and which may be stored in a persistent data storage device, such as the flash memory 110. Additional applications may be loaded onto the portable electronic device 100 through the wireless network 150, the auxiliary I/O subsystem 124, the data port 126, the short-range communications subsystem 132, or other suitable device subsystems 134.

In use, a received signal such as a text message, an e-mail message, web page download, or other data may be processed by the communication subsystem 104 and input to the processor 102. The processor 102 may then process the received signal for output to the display 112 or alternatively to the auxiliary I/O subsystem 124 (or both). A subscriber may also compose data items, such as e-mail messages, for example, which may be transmitted over the wireless network 150 through the communication subsystem 104.

For voice communications, the overall operation of the portable electronic device 100 may be similar. The speaker 128 may output audible information converted from electrical signals, and the microphone 130 may convert audible information into electrical signals for processing.

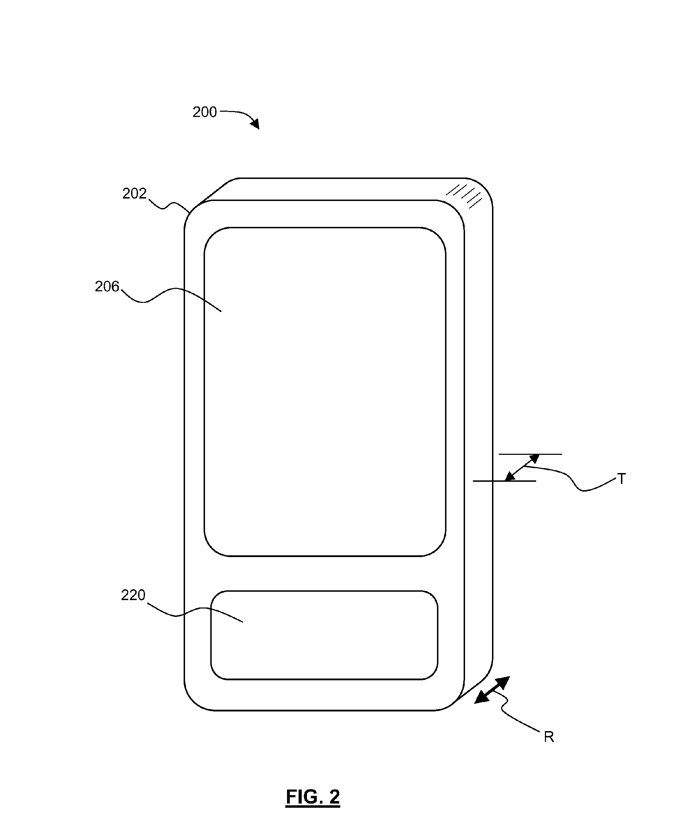

Turning now to Figure 2, illustrated therein is a portable electronic device 200 according to one embodiment. The portable electronic device 200 generally includes a body portion 202 or housing that includes a display 206, which may be the touch-sensitive display 118 as described above. In some embodiments, the body portion 202 may also include a keypad 220, and other input devices (e.g. a trackpad, other input buttons, and so on). As shown, the body portion 202 generally has a thickness T, also referred to as the device thickness.

As generally described above, the portable electronic device 200 may be adapted to provide tactile feedback using the display. In particular, the display 206 may be adapted to move in one or more directions in response to (or in association with) a user interacting with the display 206. This may be particularly useful when the display 206 is a touch screen and the user is activating virtual buttons or keys that are displayed on the display 206.

In some embodiments, the tactile feedback may include the display 206 moving along a direction R that is normal to the plane of the display 206. For example, when a user presses a virtual key or button displayed on the touch screen display 206 with a sufficient amount of force, the display 206 may move along the R direction (generally with the direction of the applied force). This movement of the display 206 simulates the user pressing a physical key or button using the display 206, giving the user the sensation or "feeling" of when the button or key has been pressed (e.g. when the device 200 recognizes the particular user action as an input).

In other embodiments, other feedback modes may be provided. For example, the device 200 may be configured so that the display 206 vibrates to provide tactile feedback in response to particular user actions, such as when the user swipes a portion of the display 206, presses other buttons thereon, and so on.

One challenge presented by using the display 206 to provide tactile feedback as described above is that at least some portion of the display 206 moves in order to provide the feedback effect. This is problematic, as conventional approaches to mounting or retaining a display in a portable electronic device tend to trap, fix or otherwise rigidly secure the components of the display to the device body. Such approaches generally do not accommodate movement of the display and accordingly are generally unsuitable for providing motion-based feedback as generally described herein.

Accordingly, techniques have been developed to securely retain the display 206 within the body portion 202 of the device 200 (e.g. so that it does not become loose or fall out of the device 200) while still allowing for relative movement between the display 206 and the body portion 202 so that tactile feedback can be provided using the display 206.

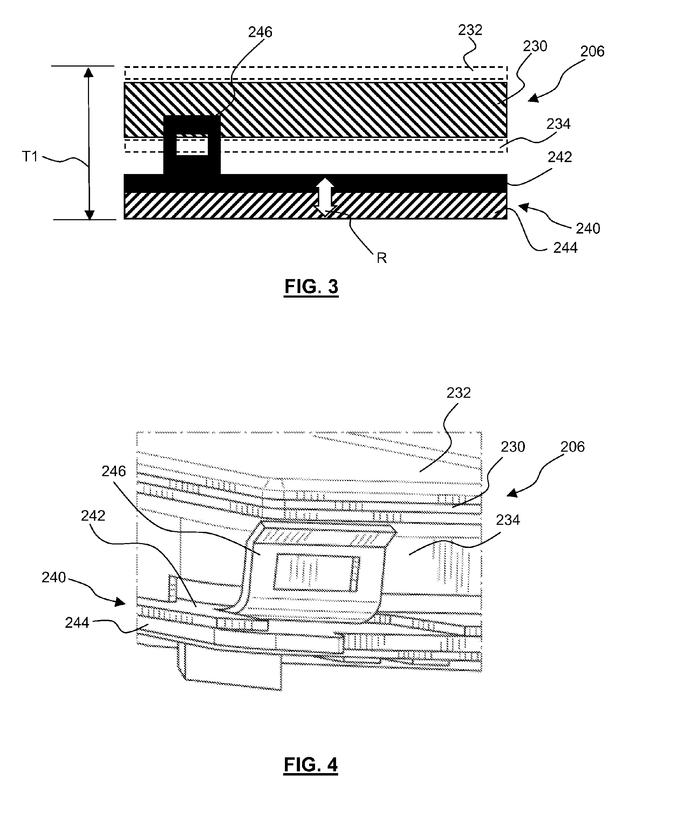

A cross-section of one embodiment is shown in Figures 3 to 5. In this embodiment, the display 206 generally includes a display core 230 (as defined below), a front bezel 232 and a rear bezel 234.

Generally, the display core 230 includes the functional components of the display 206 that generate the observable images on the display 206. For example, where the display 206 is an LCD display, the display core 230 could include elements such as filters, polarizers and the liquid crystals. Similarly, where the display 206 is an OLED display, the display core 230 could include components such as an anode and cathode, emissive layers, and one more substrates for supporting those components.

The front and rear bezels 232, 234 are structural elements (e.g. bands, rims, etc.) that are generally used to support the display core 230 and in some embodiments may secure the display core 230 to the device 200. For example, using a conventional securing approach, the front and rear bezels 232, 234 could be rigidly fastened to the body portion 202 (e.g. using screws) so that the display 206 would be rigidly coupled to the body portion 202. However, using such techniques means that the display 206 would not be movable to provide feedback.

As shown, this embodiment also includes a feedback module indicated generally as 240. The feedback module 240 is adapted to generate the motion of the display 206 to provide feedback to a user.

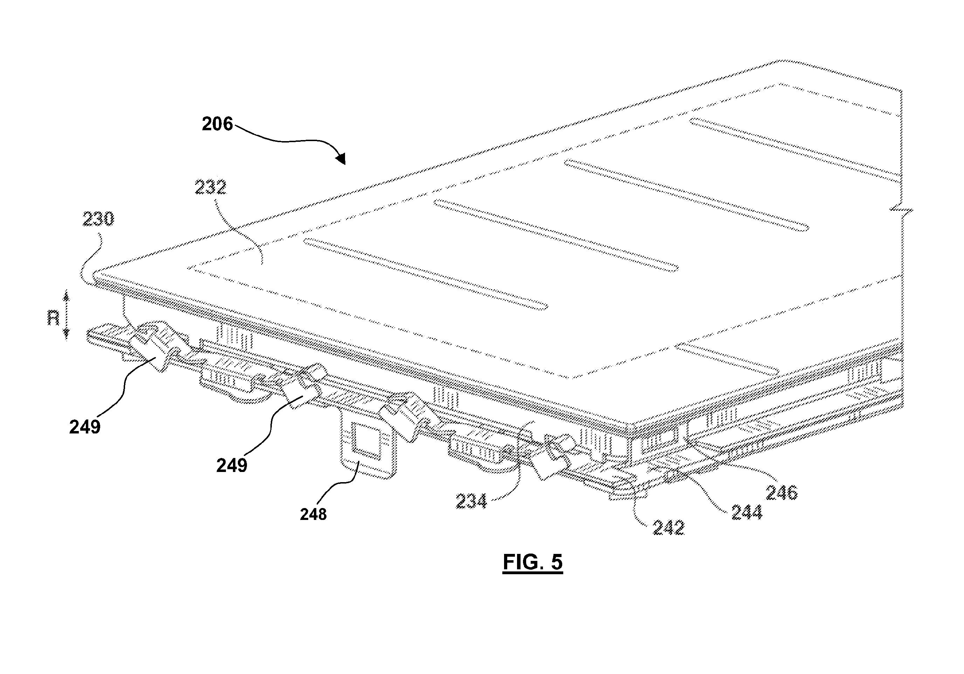

For example, in this embodiment the feedback module 240 includes a piezoelectric module 244 and a diaphragm plate 242. The piezoelectric module 244 may be coupled to the body portion 202 (e.g. using body clips 248 as shown in Figure 5), and is adapted to provide tactile feedback. In particular, the piezoelectric module 244 may be configured to generate motion when exposed to an electric field so as to cause movement of the display 206.

In some embodiments, the piezoelectric module 244 could include one or more crystals or ceramics selected to respond in a particular mode to an applied electric field generated by one or more components of the device 200 (e.g. one or more wires or copper traces coupled to the piezoelectric module). During use, the processor 102 may be operable to detect interactions with the display 206 (e.g. a user's finger touching a virtual button on the display 206) and in response generate an electrical current that causes the piezoelectric module 244 to move in a desired manner.

The body clips 248 may be adapted to allow for relative movement between the feedback module 240 and the body portion 202. Furthermore, one or more biasing members 249 (e.g. spring members) may be used to bias the feedback module 240 into a particular position relative to the body portion 202 when the feedback module 240 is inactive. For instance, the biasing members 249 may be adapted to urge the feedback module 240 outwardly in a direction normal to the display 206 when the piezoelectric module 244 is inactive, while the body clips 248 and biasing member 249 may cooperate to allow for movement of the display 206 relative to the body portion 202 when the piezoelectric module 244 is activated.

In some embodiments, the piezoelectric module 244 may also operate as a force sensor (e.g. force sensor 122), and may measure the pressure on the display 206, such as the pressure of a user's finger or thumb pushing on the display 206, and generate a corresponding electrical signal.

As shown, the diaphragm plate 242 is provided between the piezoelectric module 244 and the display 206. The diaphragm plate 242 may be a thin, semi-rigid membrane that acts as a cover for the piezoelectric module 244. The diaphragm plate 242 may also assist with transmitting generated motion from the piezoelectric module 244 to the display 206.

Several techniques may be used for securing the display 206 to the feedback module 240. For example, in the embodiment shown in Figures 3 to 5, one or more clips 246 are provided on the diaphragm plate 242 (e.g. the clips 246 may be welded to the diaphragm plate 242).

The clips 246 are sized and shaped to engage with at least a portion of the display 206, such as corresponding tab features on the bottom bezel 234, to rigidly couple the display 206 to the feedback module 240. Accordingly, when the piezoelectric module 244 is activated to generate motion (e.g. to simulate a physical button being pressed), the display 206 (including the display core 230, and the front and rear bezels 232, 234) will move accordingly.

Generally, the clips 246 may have any suitable shape and size selected to secure the display 206 to the feedback module 240. In some embodiments the clips 246 may be provided with a shape selected with a view towards reducing or even minimizing the thickness of the device 200.

In some embodiments, the clips 246 could include one or more resilient arm members that extend upwardly from the diaphragm plate and having an opening adapted to interlock with a tab provided on the bottom bezel 234. In some embodiments, the clips 246 may be integrally formed with the diaphragm plate 242.

Generally, various numbers of clips 246 may be used so as to provide for desired level of securing between the display 206 and the feedback module 240. For example, increasing the number of clips 246 may provide for a more secure coupling therebetween.

Since the display 206 is secured to and supported by the feedback module 240 (e.g. using the clips 246), and the feedback module 240 is secured to the body portion 202 (e.g. using the body clips 248), the display 206 need not be secured directly to the body portion 202. As such, the display 206 can be retained within the body portion 202 while still being movable with respect to the body portion 202, thus allowing for feedback motion to be generated by the feedback module 240 and transmitted through the display 206.

The use of clips 246 may be advantageous, as it may allow the display 206 to be easily clipped to the feedback module 240, for example during assembly of the device 200. In some embodiments, the clips 246 may also allow the display 206 to be easily removed from the feedback module 240, for example if repairs need to be made.

Generally, in this embodiment the display portion 206 and feedback module 240 have a combined thickness T1. In some embodiments, it may be desirable that the thickness T1 be reduced or even minimized, as this may help make the overall device thickness T smaller (which is generally desirable). Accordingly, where possible air gaps and other spaces between the components can be reduced or even eliminated. In particular, the gap shown in Figure 3 between the display 206 and the feedback module 240 is for illustrative purposes only, and in practice the size of the gap may be greatly reduced. In some embodiments, there is no gap between the display 206 and the feedback module 240, and the display 206 and feedback module 240 may be rigidly coupled together (e.g. using an adhesive) so that they may move together relative to the body portion 202.

In some embodiments, providing a small air gap between the display 206 and the feedback module 240 may be beneficial to allow for cooling, for example.

In some other embodiments, the display 206 may be clipped to the feedback module 240 generally without the rear bezel 234 so as to further assist in reducing the thickness T1.

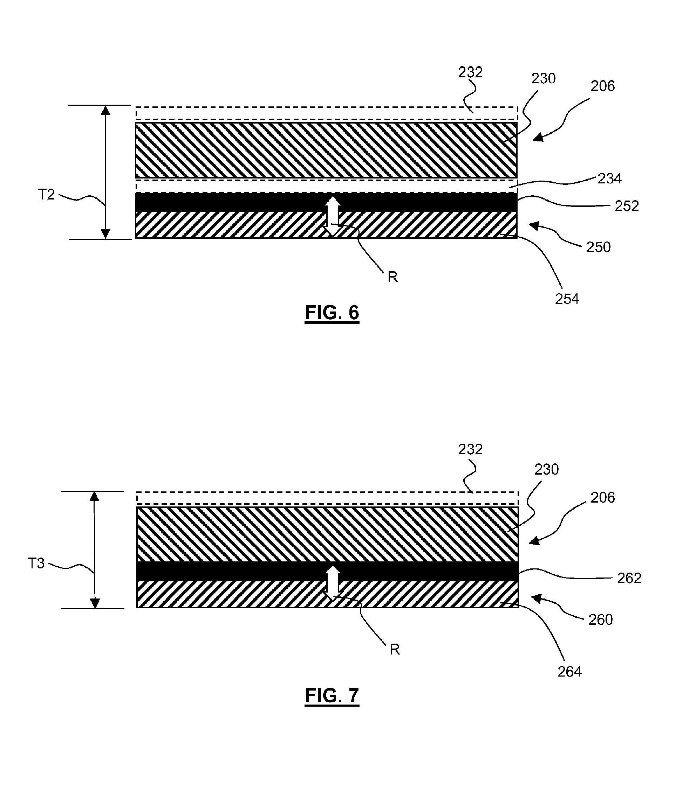

Another embodiment for securing the display 206 to the device 200 is shown in Figure 6. In this embodiment, the rear bezel 234 is coupled directly to a diaphragm plate 252 of a feedback module 250. For example, the rear bezel 234 may be secured to the diaphragm plate 252 using an adhesive. Accordingly, as a piezoelectric module 254 generates motion, this motion will be transmitted to the display 206 through the diaphragm plate 252 and rear bezel 234 to provide tactile feedback.

As shown, in this embodiment, the display 206 and feedback module 250 have a combined thickness T2. In some embodiments, this thickness T2 may be less than the first thickness T1. For example, eliminating the clips 246 as described above may allow the display 206 and feedback module 250 to be more closely spaced as compared to the display 206 and feedback module 240.

Turning now to Figure 7, illustrate therein is another embodiment for securing the display 206 to the device 200. This embodiment may be especially useful for reducing the overall device thickness T.

In particular, in this embodiment the rear bezel of the display 206 is eliminated, and the display core 230 of the display 206 is secured directly to a diaphragm plate 262 of another feedback module 260, e.g. using clips that may couple directly to one or more elements of the display core, adhesive, etc. Accordingly, as the piezoelectric module 264 is moved, the display 206 will follow that movement to provide tactile feedback (e.g. to simulate a button press)

In this embodiment, eliminating the rear bezel 234 can help reduce the overall thickness T3 of the display portion 206 and feedback module 260 by an amount that is generally equal to the thickness of the rear bezel 234. Accordingly, this may help reduce the overall device thickness T and provide for a thinner device 200.

Although not shown, in various embodiments the display 206 could include other components coupled thereto and which move in response to the movement of a feedback module. For example, the display 206 may include one or more sensor layers, glass cover plates for protecting the display core 230, coatings for inhibiting streaking or scratches of the display 206, and so on. Generally these components may move with the display 206 as tactile feedback is provided.

Generally, one or more of the embodiments as described herein may provide for one or more benefits. In particular, some embodiments generally allow a display to be securely coupled to the body of a portable electronic device while still allowing relative movement therebetween so that tactile feedback can be provided through the display. Furthermore, some embodiments as described herein allow tactile feedback to be provided through the display while reducing the overall thickness of the device. This may make the device easier to hold and may also provide for improved aesthetics to the device.

While the above description provides examples of one or more processes or apparatuses, it will be appreciated that other processes or apparatuses may be within the scope of the accompanying claims.

## Claims

1. A portable electronic device (200), comprising:
a body portion (202);
a display (206) provided in the body portion (202); and
a feedback module (240) coupled to the display (206) and the body portion (202), the feedback module (240) adapted to secure the display (206) to the body portion (202) and provide feedback by moving the display (206) relative to the body portion (202).

2. The portable electronic device (200) of claim 1, wherein the display (206) is a touch-sensitive display (118), and the feedback module (240) provides tactile feedback in response to interaction with the touch-sensitive display (118).

3. The portable electronic device (200) of claim 1 or claim 2, wherein the feedback module (240) is adapted to move the display (206) to simulate the effect of pressing a physical button using the touch screen display (206).

4. The portable electronic device (200) of any preceding claim, wherein the feedback module (240) is adapted to move the display (206) in a direction normal to a surface of the display (206).

5. The portable electronic device (200) of any preceding claim, wherein the feedback module (240) includes at least one clip (246) for securing the display (206) to the feedback module (240).

6. The portable electronic device (200) of any preceding claim, wherein the display (206) includes a rear bezel (234) coupled to the feedback module (240).

7. The portable electronic device (200) of claim 6, wherein the feedback module (240) includes a diaphragm plate (242) coupled to the rear bezel (234).

8. The portable electronic device (200) of any preceding claim, wherein the display (206) includes a display core (230), and the feedback module (240) is coupled to the display core (230).

9. The portable electronic device (200) of claim 8, wherein the feedback module (200) includes a diaphragm plate (242) coupled to the display core (230).

10. The portable electronic device (200) of any preceding claim, further comprising at least one body clip (248) for securing the feedback module (240) to the body portion (202).

11. The portable electronic device (200) of any preceding claim, further comprising at least one biasing member (249) for biasing the feedback module (240) into a particular position when the feedback module (240) is inactive.

## Amended claims

### Amended claims in accordance with Rule 137(2) EPC.

**1.** A portable electronic device (200), comprising:
a body portion (202);
a display (206) provided in the body portion (202) the display (206) including a display core (230); and
a feedback module (240) including a diaphragm plate (262) and a piezoelectric module (264), the diaphragm plate (262) provided between the piezoelectric module (264) and the display (206), the display core (230) of the display (206) secured directly to the diaphragm plate (262), the feedback module (240) adapted to secure the display (206) to the body portion (202) and provide feedback by moving the display (206) relative to the body portion (202).

**2.** The portable electronic device (200) of claim 1, wherein the display (206) is a touch-sensitive display (118), and the feedback module (240) provides tactile feedback in response to interaction with the touch-sensitive display (118).

**3.** The portable electronic device (200) of claim 1 or claim 2, wherein the feedback module (240) is adapted to move the display (206) to simulate the effect of pressing a physical button using the touch screen display (206).

**4.** The portable electronic device (200) of any preceding claim, wherein the feedback module (240) is adapted to move the display (206) in a direction normal to a surface of the display (206).

**5.** The portable electronic device (200) of any preceding claim, wherein the feedback module (240) includes at least one clip (246) for securing the display (206) to the feedback module (240).

**6.** The portable electronic device (200) of any preceding claim, further comprising at least one body clip (248) for securing the feedback module (240) to the body portion (202).

**7.** The portable electronic device (200) of any preceding claim, further comprising at least one biasing member (249) for biasing the feedback module (240) into a particular position when the feedback module (240) is inactive.
